# EUROPÄISCHE PATENTANMELDUNG

(11) **EP 3 812 407 A1**
(43) Veröffentlichungstag der Anmeldung: **28.04.2021**
(21) Anmeldenummer: 19204775.1
(22) Anmeldetag: 23.10.2019
(51) Int. Cl.: C08G 18/10, C08G 18/32, C08G 18/42, C08G 18/44, C08G 18/48, C08G 18/65, C08G 18/66, C08G 18/73, C08G 18/76, C08G 18/50

(54) **POLYURETHANPOLYMER MIT EINER HÄRTE VON <= 60 SHORE A**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein neues thermoplastisch verarbeitbares Polyurethanpolymer mit einer Härte von ≤ 60 Shore A, Zusammensetzungen enthaltend dieses Polyurethanpolymer, dessen Verwendungen und Artikel enthaltend dieses Polyurethanpolymer.

## Beschreibung

Die vorliegende Erfindung betrifft ein neues thermoplastisch verarbeitbares Polyurethanpolymer mit einer Härte von ≤ 60 Shore A, Zusammensetzungen enthaltend dieses Polyurethanpolymer, dessen Verwendungen und Artikel enthaltend dieses Polyurethanpolymer.

Thermoplastisch verarbeitbare Polyurethanpolymere (TPU) sind seit langem bekannt. Sie sind von großer technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten lässt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben. TPU's werden aus linearen Polyolen, meist Polyether oder Polyester, organischen Diisocyanaten und kurzkettigen Diolen (Kettenverlängerer) aufgebaut. Die TPU können kontinuierlich oder diskontinuierlich hergestellt werden. Die bekanntesten technischen Herstellverfahren, die auch technisch genutzt werden, sind das Bandverfahren (GB 1057018 A) und das Extruderverfahren (DE 1964834 A1 und DE 2059570 A1).

Zur Einstellung der Eigenschaften können die Aufbaukomponenten in relativ breiten molaren Verhältnissen variiert werden. Bewährt haben sich molare Verhältnisse von Makrodiolen zu Kettenverlängerern von 1:1 bis 1:12. Durch die Menge an Kettenverlängerer kann in einem weiten Bereich die Härte der TPU eingestellt werden. Hierdurch ergeben sich Produkte im Härtebereich von ca. 40 Shore A bis ca. 85 Shore D.

Zur Verbesserung des Verarbeitungsverhaltens, insbesondere der Zykluszeit, sind über den gesamten Härtebereich von ca. 40 Shore A bis ca. 85 Shore D solche TPU von besonderem Interesse, die bei Spritzgussartikeln nach dem Verarbeitungsvorgang eine sehr hohe Verfestigungsgeschwindigkeit aufweisen. Besonders bei harten TPU und weichen TPU kommt es häufig zu Problemen bei der chemischen Ankopplung von Hart- und Weichsegment aufgrund zu hoher Polaritätsunterschiede dieser Phasen. Dadurch kann das gesamte Potenzial der mechanischen Eigenschaften und der Verarbeitungseigenschaften oft nicht vollständig ausgeschöpft werden. Es hat nicht an Versuchen gefehlt, durch spezielle Verfahren diese Nachteile zu beheben.

Ein Verfahren zur Herstellung von thermoplastisch verarbeitbaren Polyurethanen wird von W. Bräuer u.a. beschrieben (EP-A 1757632). Durch ein mehrstufiges OH-Prepolymer Verfahren wird die Homogenität der TPU verbessert. Die verbesserte Homogenität verlangsamt jedoch die Verfestigungsgeschwindigkeit der TPU.

Ein Verfahren zur Herstellung von weichen, gut entformbaren thermoplastischen Polyurethanelastomeren mit geringer Schwindung wird von W. Bräuer u.a. beschrieben (EP-A 1338614). Durch Weichsegment-Vorverlängerung wurde das Entformungsverhalten von TPU zwischen 45 Shore A und 65 Shore A verbessert. Bei sehr hohen Härten hat dieses Verfahren deutlich Nachteile, weil es zu Unverträglichkeiten der Hart- und Weichphase kommt und somit eine gute Ankopplung dieser Phase nicht mehr stattfinden kann. Dadurch wird das für gute mechanische Eigenschaften notwendige hohe Molekulargewicht der TPU nicht erreicht. Auch ist dieses Verfahren in der Praxis wegen zu hohen und schwankenden Viskositäten der Prepolymerstufe sehr instabil und funktioniert unter 60 Shore A nicht mehr zufriedenstellend, sodass häufig Extruderstillstände vorkommen.

Weitere weiche thermoplastische Polyurethanelastomere, ein Verfahren zu ihrer Herstellung und Verwendung wird ebenfalls von W. Bräuer u.a. beschrieben (EP-A 1932863). Durch die Kombination von verschiedenen Polyesterpolyolen und Kettenverlängerern wurden TPU mit guter Entformbarkeit erhalten. Jedoch werden dabei keine TPU auf Basis von Polyethern beschrieben. Bei weichmacherfreien TPU nach diesem Verfahren mit einer Härte kleiner als 60 Shore A hat man bisher nur eine sehr langsame Verfestigung nach der Spritzgießverarbeitung erzielt.

Aufgrund der hohen Anwendungsbreite von TPUs und insbesondere weichen TPUs, d.h. TPUs mit einer Shore Härte von 60 Shore A, besteht ein hoher Bedarf entsprechend maßgeschneiderte weiche TPUs bereitzustellen. Weiterhin besteht ein Bedarf an Zusammensetzungen von weichen TPUs die keinen Weichmacher enthalten, aber trotzdem elastisch und mechanisch belastbar sind.

Aufgabe der Erfindung war es daher, ein neues thermoplastisch verarbeitbares Polyurethanpolymer mit einer Härte von ≤ 60 Shore A bereitzustellen, welches gute Verarbeitungseigenschaften und gute mechanische Eigenschaften aufweist. Weiterhin war es Aufgabe der Erfindung eine weichmacherfreie Zusammensetzung eines thermoplastisch verarbeitbaren Polyurethanpolymers mit einer Härte von ≤ 60 Shore A bereitzustellen.

Diese Aufgabe wurde überraschend gelöst durch ein thermoplastisch verarbeitbares Polyurethanpolymer mit einer Härte von ≤ 60 Shore A erhältlich oder erhalten durch Umsetzen der Komponenten
(A) einem oder mehreren im Wesentlichen linearen Polyetherpolyolen und / oder Polyesterpolyolen, wobei die Gesamtmenge der Komponente (A) ein mittleres Molekulargewicht im Bereich von 500 g/mol bis 5000 g/mol aufweist,
(B) einem oder mehreren Diisocyanaten ausgewählt aus der Gruppe bestehend aus 2-Methyl-1,5-diisocyanatopentan, 1,4-Diisocyanatobutan (BDI), 1,5-Diisocyanatopentan (PDI), 1,6-Diisocyanatohexan (HDI), 2,2,4-Trimethyl-l,6-diisocyanatohexan, 2,4,4-Trimethyl-1,6-diisocyanatohexan oder Diphenylmethandiisocyanat-Isomerengemische mit einem 4,4'-Diphenylmethandiisocyanatgehalt von >96 Gew.-%,
(C) einem oder mehreren linearen Diolen mit einem Molekulargewicht von 62 g/mol bis 500 g/mol,
(D) gegebenenfalls in Gegenwart von einem oder mehreren Katalysatoren,
(E) gegebenenfalls in Gegenwart von einem oder mehreren Additiven, Hilfs- und / oder Zusatzstoffen, und
(F) gegebenenfalls in Gegenwart von einem oder mehreren monofunktionellen Kettenabbrechern,
dadurch gekennzeichnet, dass das Verfahren die folgenden Schritte umfasst oder daraus besteht:
1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
3) Umsetzen des OH-funktionellen Prepolymers mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt.

Die erfindungsgemäßen Polyurethanpolymere weisen bessere Eigenschaften auf, als solche die nach aus dem Stand der Technik bekannten Verfahren hergestellt wurden. Insbesondere härten die erfindungsgemäßen Polyurethanpolymere schneller aus und weisen eine höhere Abriebfestigkeit, sehr niedrige Druckverformungsrestwerte bei unterschiedlichen Temperaturen, eine hohe mechanische Dämpfung (tan D), verbesserte Hydrolysestabilität, gute Alterungsbeständigkeit, eine verbesserte Zugfestigkeit sowie eine gute Haftung zu anderen Polymeren auf. Darüber hinaus verfestigt das Material schneller und lässt sich so beim Spritzgießen früher und leichter entformen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

"Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-%, noch mehr bevorzugter mindestens 99,8 Mol-% und am Bevorzugtesten 100 Mol-% der Gesamtstoffmenge der Polyole der Komponente A) aus linearen Polyolen bestehen.

Bevorzugt bedeuten erfindungsgemäß die Ausdrücke "umfassend" oder "enthaltend", "im Wesentlichen bestehend aus" und besonders bevorzugt "bestehend aus".

Die Härte der thermoplastisch verarbeitbaren Polyurethane kann durch Wahl des molaren Verhältnisses von Komponente A) zu Komponente C) von 35 Shore A bis 60 Shore A eingestellt werden.

Die Mengen der Reaktionskomponenten für die NCO-funtionelle Prepolymerbildung in Schritt 1) werden so gewählt, dass das NCO/OH-Verhältnis von Polyisocyanat zu Polyol in Schritt 1) 1,1:1 bis 5,0:1 beträgt.

Die Komponenten werden innig gemischt und die NCO-Prepolymerreaktion in Schritt 1) wird vorzugsweise zum vollständigen Umsatz (bezogen auf die Polyolkomponente) gebracht.

Anschließend erfolgt die Einmischung von mindestens Komponente (C) als Kettenverlänger (Schritt 2) zu einem im wesentlichen OH-funktionellen Prepolymer.

"Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-%, noch mehr bevorzugter mindestens 99,8 Mol-% und am Bevorzugtesten 100 Mol-% der Gesamtstoffmenge der gebildeten Prepolymere, OH-funktionelle Prepolymere sind.

Danach wird in Schritt 3) die Restmenge der Komponente (B) hinzugegeben, wobei ein NCO/OH - Verhältnis von 0,9:1 bis 1,2:1 eingehalten wird. Bevorzugt wird in Schritt 3) die gleich Komponente (B) eingesetzt wie in Schritt 1).

In einer bevorzugten Ausführungsform des erfindungsgemäßen thermoplastisch verarbeitbaren Polyurethans liegt im Verfahrensschritt 2) ein molares Verhältnis von NCO-funktionellen Prepolymer zu Komponente (C) von kleiner 1,0 vor. Die Komponente (C) liegt somit im molaren Überschuss vor.

Als Komponente (A) eignen sich alle im Wesentlichen linearen Polyesterpolyole und / oder Polyetherpolyole die dem Fachmann bekannt sind und ein mittleres Molekulargewicht von größer 500 g/mol aufweisen.

Geeignete Polyesterdiole a) können beispielsweise aus Dicarbonsäuren mit 2 bis 12 Kohlenstoffatomen, vorzugsweise 2 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, Dodecandisäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterpolyole kann es gegebenen¬falls vorteilhaft sein, anstelle der Dicarbonsäuren die entsprechenden Dicarbon¬säurederivate, wie Carbon¬säurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 12, vorzugsweise 2 bis 6 Kohlenstoffatomen, wie beispielsweise Ethylenglykol, Diethylenglykol, 1,4-Butandiol, 1,5-Pentandiol, 1,6-Hexandiol, 1,10-Decandiol, 1,12-Dodecandiol, 2,2-Dimethyl-1,3-propandiol, 1,3-Propandiol, 1,2-Propandiol und Dipropylenglykol. Je nach den gewünschten Eigenschaften können die mehrwertigen Alkohole allein oder gegebenenfalls in Mischung untereinander verwendet werden. Geeignet sind ferner Konden¬sationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterpolyole werden vorzugsweise Ethandiol-polyadipate, 1,4-Butandiol-polyadipate, 1,6-Hexandiol-polyadipate, Ethandiol-1,4-butandiol-polyadipate, 1,6-Hexandiolneopentylglykol-polyadipate, 1,6-Hexandiol-1,4-butandiol-polyadipate und Polycaprolactone verwendet. Die Polyesterdiole weisen Molekulargewichte im Bereich von 500 bis 5000 g/mol, vorzugsweise im Bereich von 600 bis 3500 g/mol und besonders bevorzugt im Bereich von 800 bis 3000 g/mol. Sie können einzeln oder in Form von Mischungen untereinander zur Anwendung kommen.

Geeignete Polyetherdiole b) können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Geeignete Polyetherdiole besitzen ein zahlenmittleres Molekulargewichte Mₙ von 500 bis 5000 g/mol, vorzugsweise 750 bis 5000 g/mol und ganz besonders bevorzugt 900 bis 4200 g/mol. Sie können sowohl einzeln als auch in Form von Mischungen untereinander zur Anwendung kommen.

In einer weiteren bevorzugten Ausführungsform des erfindungsgemäßen thermoplastisch verarbeitbaren Polyurethans werden als Komponente A Polyesterdiole mit einer Schmelztemperatur von ≤ 50 °C, Polyetherpolyole und / oder Mischungen aus mindestens 2 hieraus eingesetzt, vorzugsweise werden als Komponente A Polyetherpolyole, besonders bevorzugt Polyethylendiolether, Polypropylendiolether, Polytetramethylenglykol, und / oder Mischungen aus mindestens 2 hieraus, noch bevorzugter Polypropylendiolether eingesetzt.

In einer weiteren bevorzugten Ausführungsform des erfindungsgemäßen thermoplastisch verarbeitbaren Polyurethans weisen die Polyetherpolyole ein zahlenmittleres Molekulargewichte Mₙ im Bereich von 750 bis 5000 g/mol und vorzugsweise im Bereich von 900 bis 4200 g/mol auf.

In einer weiteren bevorzugten Ausführungsform des erfindungsgemäßen thermoplastisch verarbeitbaren Polyurethans werden als Komponente (A) ein oder mehrere Polyesterdiole mit einem mittleren Molekulargewicht im Bereich von 500 g/mol bis 5000 g/mol, vorzugsweise im Bereich von 600 g/mol bis 3500 g/mol und besonders bevorzugt im Bereich von 800 g/mol bis 3000 g/mol, eingesetzt.

In einer weiteren bevorzugten Ausführungsform des erfindungsgemäßen thermoplastisch verarbeitbaren Polyurethans werden als Komponente (A) ein oder mehrere Polyetherdiole mit einem mittleren Molekulargewicht im Bereich von 500 g/mol bis 5000 g/mol, vorzugsweise im Bereich von 750 g/mol bis 5000 g/mol und besonders bevorzugt im Bereich von 900 g/mol bis 4200 g/mol, eingesetzt.

In einer weiteren bevorzugten Ausführungsform des erfindungsgemäßen thermoplastisch verarbeitbaren Polyurethans ist das eine oder sind die mehreren Polyetherdiole unabhängig voneinander Polyether auf Basis eines Polymerisats von Ethylenoxid oder Propylenoxyd oder einem Gemisch aus verschiedenen Polymerisaten dieser Rohstoffe.

In einer weiteren bevorzugten Ausführungsform des erfindungsgemäßen thermoplastisch verarbeitbaren Polyurethans ist das eine oder sind die mehreren Polyetherdiole unabhängig voneinander Polyether auf Basis eines Polymerisats von Tetrahydrofuran.

Bei den als Komponente (B) eingesetzten Diisocyanaten ist es unerheblich, ob die Diisocyanate mittels Phosgenierung oder nach einem phosgenfreien Verfahren erhalten wurden. Die Diisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei das 1,6-Hexamethylendiamin und das 1,5-Pentamethylendiamin aus biologischen Quellen, vorzugsweise durch bakterielle Fermentation, gewonnen werden.

In einer weiteren bevorzugten Ausführungsform des erfindungsgemäßen thermoplastisch verarbeitbaren Polyurethans werden als Komponente (B) 2-Methyl-1,5-diisocyanatopentan, 1,6-Diisocyanatohexan (HDI), 2,2,4-Trimethyl-l,6-diisocyanatohexan, Diphenylmethandiisocyanat-Isomerengemische mit einem 4,4'-Diphenylmethandiisocyanatgehalt von >96 Gew.-% und / oder Mischungen aus mindestens 2 hieraus eingesetzt, vorzugsweise werden Diphenylmethandiisocyanat-Isomerengemische mit einem 4,4'-Diphenylmethandiisocyanatgehalt von >96 Gew.-% und besonders bevorzugt 4,4'-Diphenylmethandiisocyanat eingesetzt.

In einer weiteren bevorzugten Ausführungsform des erfindungsgemäßen thermoplastisch verarbeitbaren Polyurethans wird als Komponente (B) ein Diphenylmethandiisocyanat-Isomerengemisch mit einem 4,4'-Diphenylmethandiisocyanatgehalt von größer 96 Gew.-% bezogen auf das Gesamtgewicht der Komponente (B) eingesetzt, vorzugsweise wird als Komponente (B) 4,4'-Diphenylmethandiisocyanat eingesetzt.

In einer weiteren bevorzugten Ausführungsform des erfindungsgemäßen thermoplastisch verarbeitbaren Polyurethans wird als Komponente (B) 1,6-Hexamethylendiisocyanat eingesetzt.

Als Komponente (C) (Ketternverlängerer) eignen sich alle dem Fachmann bekannten linearen Diolen mit einem Molekulargewicht von 62 g/mol bis 500 g/mol. Die Diole und / oder deren Vorläuferverbindungen können aus fossilen oder biologischen Quellen gewonnen worden sein. Geeignete Diole sind vorzugsweise aliphatische Diole mit 2 bis 14 Kohlenstoffatomen, wie z.B. Ethandiol, 1,4-Butandiol, 1,6-Hexandiol, 1,8-Octandiol, 1,10-Decandiol, 1,12-Dodecandiol, Diethylenglykol und Dipropylenglykol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di-(hydroxyethyl)-hydrochinon und ethoxylierte Bisphenole. Besonders bevorzugt werden als kurzkettige Diole Ethandiol, 1,4-Butandiol, 1,6-Hexandiol und 1,4-Di-(hydroxyethyl)-hydrochinon eingesetzt. Es können auch Gemische der vorgenannten Kettenverlängerer eingesetzt werden. Daneben können auch kleine Mengen an Diaminen und / oder an Triolen zugesetzt werden.

In einer weiteren bevorzugten Ausführungsform des erfindungsgemäßen thermoplastisch verarbeitbaren Polyurethans werden als Komponente (C) 1,2-Ethandiol, 1,4-Butandiol, 1,6-Hexandiol, 1,4-Di-(hydroxyethyl)-hydrochinon, 1,3- Cyclobutandiol und / oder Mischungen aus mindestens 2 hieraus eingesetzt, vorzugsweise werden 1,2-Ethandiol, 1,4-Butandiol, 1,6-Hexandiol und / oder Mischungen aus mindestens 2 hieraus, besonders bevorzugt 1,2-Ethandiol, 1,4-Butandiol und / oder Mischungen hieraus eingesetzt.

In einer weiteren bevorzugten Ausführungsform des erfindungsgemäßen thermoplastisch verarbeitbaren Polyurethans werden als Komponente (C) ein oder mehrere Diole eingesetzt, ausgewählt aus der Gruppe bestehend aus 1,2-Ethandiol, 1,4-Butandiol, 1,6-Hexandiol, 1,4-Di-(beta-Hydroxyethyl)hydrochinon oder einen Gemisch aus mindestens zwei von diesen eingesetzt, vorzugsweise werden als Komponente (C) 1,2-Ethandiol, 1,4-Butandiol oder Mischungen hieraus eingesetzt und besonders bevorzugt wird als Komponente (C) 1,2-Ethandiol eingesetzt.

Als Katalysatoren (D) können die üblichen aus der Polyurethanchemie bekannten Katalysatoren eingesetzt werden. Geeignete Katalysatoren sind an sich bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan, und ähnliche sowie insbesondere organische Metallverbindungen wie Titansäureester, Eisenverbindungen, Wismutverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt sind Dibutylzinndilaurat, Zinndioctoat und Titansäureester.

Als Additive, Hilfs- und Zusatzstoffe (E) können beispielsweise Gleitmittel, wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe, Nukleierungsmittel und Verstärkungsmittel eingesetzt werden. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzmittel sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Als monofunktionelle Kettenabbrecher (F) können Monoalkohole wie z. B. 1-Butanol, 1-Hexanol, 1-Oktanol und Stearylalkohol oder Monoamine, wie z. b. 1-Butylamin und Stearylamin eingesetzt werden, um ein bestimmtes TPU-Molekulargewicht einzustellen.

In einer weiteren bevorzugten Ausführungsform des erfindungsgemäßen thermoplastisch verarbeitbaren Polyurethans weist das thermoplastisch verarbeitbares Polyurethanpolymer eine Härte im Bereich von 35 Shore A bis 60 Shore A, vorzugsweise im Bereich von 40 Shore A bis 60 Shore A, besonders bevorzugt im Bereich von 40 Shore A bis 55 Shore A auf.

In einer weiteren bevorzugten Ausführungsform des erfindungsgemäßen thermoplastisch verarbeitbaren Polyurethans weist das thermoplastisch verarbeitbares Polyurethanpolymer im Bereich von 0 °C bis 20 °C ein tanD von ≥ 0,20 auf, wobei tanD gemäß DIN EN ISO 6721-1:2011 bestimmt wurde. Vorzugsweise weist das thermoplastisch verarbeitbares Polyurethanpolymer bei 0 °C ein tanD im Bereich von 0,20 bis 0,40, besonders bevorzugt im Bereich von 0,30 bis 0,40 aufweist, wobei tanD gemäß DIN EN ISO 6721-1:2011 bestimmt wurde. Vorzugsweise weist das thermoplastisch verarbeitbares Polyurethanpolymer bei 20 °C ein tanD im Bereich von 0,20 bis 0,26, besonders bevorzugt im Bereich von 0,21 bis 0,25 aufweist, wobei tanD gemäß DIN EN ISO 6721-1:2011 bestimmt wurde.

Besonders bevorzugt werden die erfindungsgemäßen thermoplastisch verarbeitbaren Polyurethane mit einer Härte von Shore A 40 bis Shore A 60 aus folgenden Hauptkomponenten hergestellt:
Komponente (A):
   i) 1,4-Butandiol-polyadipate, 1,6-Hexandiol-polyadipate, Ethandiol-1,4-butandiol-polyadipate, 1,6-Hexandiol-neopentylglykol-polyadipate, 1,6-Hexandiol-1,4-butandiol-polyadipate und deren Mischungen mit Molekulargewichten von 500 bis 5000 g/mol, oder
   ii) Polypropylenoxide oder Polyethylen-/Polypropylenoxide und/oder Polymerisate des Tetrahydrofurans und deren Mischungen mit Molekulargewichten von 500 bis 5000 g/mol,
Komponente (B):
   iii) 4,4'-Diphenylmethandiisocyanat, 4,4'-Dicyclohexylmethandiisocyanat und/oder 1,6-Hexamethylendiisocyanat
Komponente (C):
   iv) Ethandiol, 1,4-Butandiol, 1,6-Hexandiol und/oder 1,4-Di-(hydroxyethyl)-hydrochinon.,
wobei auch Mischungen der Komponenten innerhalb i) bis iv) und auch zwischen i) und ii) eingesetzt werden können.

Die erfindungsgemäßen thermoplastisch verarbeitbaren Polyurethane können mit dem erfindungsgemäßen Verfahren diskontinuierlich oder kontinuierlich hergestellt werden. Die bekanntesten technischen Herstellverfahren dafür sind das Bandverfahren (GB-A 1 057018) und das Extruderverfahren (DE-A 1 964 834, DE-A2 059570 und US-A 5 795 948)

Zur Herstellung der thermoplastisch verarbeitbaren Polyurethanpolymere eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder und Busskneter.

Die erfindungsgemäßen thermoplastisch verarbeitbaren Polyurethane können z.B. auf einem Zweiwellenextruder dadurch hergestellt werden, dass man das Prepolymer im ersten Teil des Extruders herstellt und die Kettenverlängerung und Polyisocyanatzugabe im zweiten Teil anschließt. Erfindungsgemäß muss die Dosierung des Kettenverlängerers (Komponente (C)) vor der Dosierung des weiteren Polyisocyanates erfolgen. Die Zugabe des Kettenverlängerers und Polyisocyanates darf nicht parallel in die gleiche Dosieröffnung des Extruders erfolgen.

Das NCO- und OH-Prepolymer können aber auch außerhalb des Extruders in einem separaten, vorgeschalteten Prepolymerreaktor, diskontinuierlich in einem Kessel oder kontinuierlich in einem Rohr mit Statikmischern oder einem gerührten Rohr (Rohrmischer) hergestellt werden.

Ein in einem separaten Prepolymerreaktor hergestelltes OH-Prepolymer kann aber auch mittels eines ersten Mischapparates, z.B eines Statikmischers, mit dem Diisocyanat und mittels eines zweiten Mischapparates, z. B. eines Mischkopfes, mit dem Restmengen Polyisocyanaten vermischt werden. Anschließend wird dieses Reaktionsgemisch analog dem bekannten Bandverfahren kontinuierlich auf einen Träger, bevorzugt ein Förderband, aufgebracht, wo man es bis zur Erstarrung des Materials ggf. unter Beheizung des Bandes zum TPU reagieren lässt.

Ein weiterer Gegenstand der Erfindung ist eine weichmacherfreie Zusammensetzung enthaltend mindestens ein erfindungsgemäßes thermoplastisch verarbeitbares Polyurethanpolymer und ein Additiv.

Des Weiteren gelingt es unter anderem auch eine Zusammensetzung mit den erfindungsgemäßen thermoplastisch verarbeitbaren Polyurethanen, ohne die Verwendung von Weichmachern, bereitzustellen, die nach der Spritzgießverarbeitung eine schnelle Verfestigungsgeschwindigkeit aufweisen.

Aufgrund der guten mechanischen Eigenschaften, der guten Hydrolysestabilität und der guten Alterungsbeständigkeit, eignen sich die erfindungsgemäßen thermoplastisch verarbeitbaren Polyurethanpolymere oder eine erfindungsgemäßen weichmacherfreien Zusammensetzung sehr gut für Anwendungen bei denen der Werkstoff einer mechanischen Belastung ausgesetzt ist, oder ein hohe mechanische Dämpfung (tan D) benötigt wird, eine gute Materialbeständigkeit (bspw. gute Abriebsbeständigkeit) sowie eine gute Haftung zu anderen Werkstoffen insbesondere Polymeren erforderlich ist, wie dies beispielsweise bei Dichtungen, Vibrationsdämpfern, Schwingungsisolatoren, Verbindungsisolatoren, Handgriffen, Folien, Garnen und / oder Fließstoffen der Fall ist.

Ein weiterer Gegenstand der Erfindung ist die Verwendung eines erfindungsgemäßen thermoplastisch verarbeitbaren Polyurethanpolymers mit einer Härte von ≤ 60 Shore A oder einer erfindungsgemäßen weichmacherfreien Zusammensetzung zur Herstellung von Dichtungen.

In einer bevorzugten Ausführungsform sind die Dichtungen direkt angespritzte Gehäusedichtungen von Elektro- und Elektronikgeräten und / oder extrudierte Dichtungsprofile.

Ein weiterer Gegenstand der Erfindung ist eine Dichtung umfassend oder enthaltend mindestens ein erfindungsgemäßes thermoplastisch verarbeitbares Polyurethanpolymer mit einer Härte von ≤ 60 Shore A oder eine erfindungsgemäße weichmacherfreie Zusammensetzung.

In einer bevorzugten Ausführungsform ist die Dichtung eine direkt angespritzte Gehäusedichtung von Elektro- und Elektronikgeräten und / oder eine extrudiertes Dichtungsprofil.

Ein weiterer Gegenstand der Erfindung ist die Verwendung eines erfindungsgemäßen thermoplastisch verarbeitbaren Polyurethanpolymers mit einer Härte von ≤ 60 Shore A oder einer erfindungsgemäßen weichmacherfreien Zusammensetzung zur Herstellung von Vibrationsdämpfer, Schwingungsisolatoren und / oder Verbindungsisolatoren.

In einer bevorzugten Ausführungsform sind die Vibrationsdämpfer, Schwingungsisolatoren und / oder Verbindungsisolatoren Standfüße für Elektro- und Elektronikgeräte, Maschinenfüße, Ecken- und / oder Kantenschutz, Dämpfer für die Seiten von Tennis- und / oder Squashschlägern,

Weichkomponente für Schutzhüllen von Mobiltelefonen und / oder Standfüße von Koffern, Sporttaschen oder Freizeittaschen.

Ein weiterer Gegenstand der Erfindung ist ein Vibrationsdämpfer, ein Schwingungsisolator und / oder ein Verbindungsisolator umfassend oder enthaltend mindestens ein erfindungsgemäßes thermoplastisch verarbeitbares Polyurethanpolymer mit einer Härte von ≤ 60 Shore A oder eine erfindungsgemäße weichmacherfreie Zusammensetzung.

In einer bevorzugten Ausführungsform ist der Vibrationsdämpfer, der Schwingungsisolator und / oder der Verbindungsisolator ein Standfuß für Elektro- und Elektronikgeräte, ein Maschinenfuß, ein Ecken- und / oder Kantenschutz, ein Dämpfer für die Seiten von Tennis- und / oder Squashschlägern, eine Weichkomponente für Schutzhüllen von Mobiltelefonen und / oder ein Standfuß von Koffern, Sporttaschen oder Freizeittaschen.

Ein weiterer Gegenstand der Erfindung ist die Verwendung eines erfindungsgemäßen thermoplastisch verarbeitbaren Polyurethanpolymers mit einer Härte von ≤ 60 Shore A oder einer erfindungsgemäßen weichmacherfreien Zusammensetzung zur Herstellung von Handgriffen.

In einer bevorzugten Ausführungsform sind die Handgriffe Bestandteil von Handgeräten, Elektrogeräten, Sportgeräten, Elektronikgeräten, Koffern, Sporttaschen, Freizeittaschen, Fahrzeugen, Fahrrädern, Werkzeugen, Behältern und / oder Schreibgeräten.

Ein weiterer Gegenstand der Erfindung ist ein Handgriff umfassend oder enthaltend mindestens ein erfindungsgemäßes thermoplastisch verarbeitbares Polyurethanpolymer mit einer Härte von ≤ 60 Shore A oder eine erfindungsgemäße weichmacherfreie Zusammensetzung.

In einer bevorzugten Ausführungsform ist der Handgriff ein Bestandteil von Handgeräten, Elektrogeräten, Sportgeräten, Elektronikgeräten, Koffern, Sporttaschen, Freizeittaschen, Fahrzeugen, Fahrrädern, Werkzeugen, Behältern und / oder Schreibgeräten.

Ein weiterer Gegenstand der Erfindung ist die Verwendung eines erfindungsgemäßen thermoplastisch verarbeitbaren Polyurethanpolymers mit einer Härte von ≤ 60 Shore A oder einer erfindungsgemäßen weichmacherfreien Zusammensetzung zur Herstellung von Folien, Garn und / oder Fließstoffen.

In einer bevorzugten Ausführungsform ist die Folie, das Garn und / oder der Fließstoff Bestandteil von einem Oberschuh, von Bekleidung und / oder von Kunstleder, insbesondere Kunstleder für Möbel oder Automobilinnenanwendungen.

In einer bevorzugten Ausführungsform ist die Folie, eine Folie die mit harten Thermoplasten hinterspritzt oder mit PU-Schaumstoff hinterschäumt wird bzw. wurde und / oder Bestandteil eines Schichtverbunds.

Ein weiterer Gegenstand der Erfindung ist eine Folie, ein Garn und / oder ein Fließstoffe umfassend oder enthaltend mindestens ein erfindungsgemäßes thermoplastisch verarbeitbares Polyurethanpolymer mit einer Härte von ≤ 60 Shore A oder eine erfindungsgemäße weichmacherfreie Zusammensetzung.

In einer bevorzugten Ausführungsform ist die Folie, das Garn und / oder der Fließstoff Bestandteile von einem Oberschuh, von Bekleidung und / oder von Kunstleder für Möbel oder Automobilinnenanwendungen.

In einer bevorzugten Ausführungsform ist die Folie, eine Folie die mit harten Thermoplasten hinterspritzt oder mit PU-Schaumstoff hinterschäumt wird bzw. wurde und / oder Bestandteil eines Schichtverbunds.

Die Erfindung soll anhand der nachfolgenden Beispiele näher erläutert werden.

### Messmethoden:

### Zugversuch:

Messungen im Zugversuch nach ISO 53504 (2009-10) mit einer Zuggeschwindigkeit von 200 mm/min.

### Shore Härte:

Die Messung der Shore Härte erfolgte nach DIN ISO 7619-1 (2012-02-01).

### Verfestigungsgeschwindigkeit (Härte bei 0s / 60s):

Zur Ermittlung der Verfestigungsgeschwindigkeit wurde die Härteentwicklung von runden Formkörpern (Durchmesser 30 mm, Höhe 6 mm) nach der Spritzgießverarbeitung (Einstellung der Spritzgießmaschine: 25 s Kühlzeit und 25 s Nachdruckzeit) gemessen. Dabei wurde die Härte der Prüfkörper nach DIN 7619-1 (2012-02-01) sofort nach der Entnahme aus der Form (0 s) und nach 60 s gemessen.

### Abriebwiderstand :

Bestimmung des Abriebwiderstandes erfolgte nach ISO 4649:2014-03.

### Druckverformungsrest:

Bestimmung des Druckverformungsrestes erfolgt nach DIN ISO 815-1 09/2010

### Alterungstest:

Die nach_ISO 53504 (2009-10) hegestellten Stäbchen wurden jeweils in einem Klimaschrank bei 80°C bzw 110°C mit 95% Luftfeuchtigkeit gelagert. Nach 28 Tage und 49 Tage wurde die Zugfestigkeit gemessen und die erhaltenden Werte für die Zugfestigkeit verglichen (Zugfestigkeit mit Lagerung (Alterung) vs. Zugfestigkeit ohne Lagerung (Alterung).

### Verwendete Rohstoffe:

Polyol 1 = Acclaim®2200N (Handelsprodukt von Covestro Deutschland AG, Polypropylendiolether, Molekulargewicht ca. 2000g/mol)
BDO = 1,4-Butandiol (BDO, Reinheit ≥ 99 Gew.-%) wurde von der Firma Ashland bezogen.
MEG = 1,2-Ethandiol (MEG, Reinheit ≥ 99 Gew.-%) wurde von der Firma OQEMA AG bezogen.
MDI = 4,4'-Diphenylmethandiisocyanat (MDI, Reinheit ≥ 99 Gew.-%) wurde von der Covestro AG bezogen.
HDI = 1,6-Hexamethylendiisocyanat (HDI, Reinheit ≥ 99 Gew.-%) wurde von der Covestro AG bezogen.

### Beispiele

In der Tabelle 1 wird die Erfindung anhand einiger Beispiele verdeutlicht. Die verwendeten Herstellverfahren sind nachstehend beschrieben.

### Verfahren 1*: Weichsegment-Vorverlängerung (gemäß der EP-A 1338614), nicht erfindungsgemäß

Stufe 1: Die Teilmenge 1 des MDI's wird bei ca.140°C mit 1mol Polyol oder Polyolgemisch unter Rühren zum Umsatz > 90 mol-%, bezogen auf das Polyol, gebracht.
Stufe 2: Dem gerührten Reaktionsgemisch wird die Teilmenge 2 des MDI und anschließend der Kettenverlängerer zugegeben, nach intensiver Durchmischung (ca. 20 s) wird das Reaktionsgemisch auf ein Blech gegossen und anschließend 30 Minuten bei 120°C getempert.

### Verfahren 2: Erfindungsgemäßes Mehrstufen-Vorverlängerungsverfahren MDI

Stufe 1: Die Teilmenge 1 des MDI's wird bei ca.140°C mit 1 mol Polyol oder Polyolgemisch unter Rühren zum Umsatz > 90 mol-%, bezogen auf das Polyol, gebracht.
Stufe 2: Dem gerührten Reaktionsgemisch wird der Kettenverlängerer zugegeben und ca. 10 s intensiv gerührt.
Stufe 3: Die Teilmenge 2 des MDI's wird der gerührten Reaktionsmischung zugegeben. Das Reaktionsgemisch wird weitere 20 s gerührt, anschließend auf ein Blech gegossen und 30 Minuten bei 120°C getempert.

Die erhaltenen TPU-Gießplatten wurden geschnitten und granuliert. Das Granulat wurde mit einer Spritzgießmaschine vom Typ Arburg Allrounder 470S in einem Temperaturbereich von 180° bis 230°C und in einem Druckbereich von 650 bis 750 bar bei einem Einspritzstrom von 10 bis 35 cm³/s zu Stäben (Formtemperatur: 40°C; Stabgröße: 80x10x4mm) bzw. Platten (Formtemperatur: 40°C; Größe: 125x50x2 mm) verarbeitet.

Von den hergestellten TPU Produkten wurden die mechanischen Werte (100% Modul, 300%-Modul, Reißfestigkeit, Reißdehnung und Shore A/D Härte), die Verfestigungsgeschwindigkeit, der Abriebwiderstand und der Druckverformungsrest bestimmt sowie die Alterungsbeständigkeit ermittelt.

**Tabelle 1: Vergleichsbeispiele 1 und 4, Beispiele 2, 3, 5, 6 und 7: Messergebnisse von weichen TPUs**

| Versuchsnummer | Verfahren | Polyol | Kettenverlängerer | MDI / Teilmenge 1 [mol] | MDI / Teilmenge 2 [mol] | Theoretische Härte^{#} | Härte [Shore] | 100% Modul [MPa] | Zugfestigkeit [MPa] | Härte bei 0s/60s [Shore A] |
|---|---|---|---|---|---|---|---|---|---|---|
| 1* | 1 | 1 | MEG | 1,5 | 0,539 | 12 | 42A | 2,4 | 15,3 | 19/25 |
| 2 | 2 | 1 | MEG | 1,5 | 0,539 | 12 | 47A | 1,5 | 15,1 | 26/33 |
| 3 | 2 | 1 | MEG | 1,5 | 1,642 | 22.4 | 60A | 4,3 | 14,4 | 39/43 |
| 4* | 1 | 1 | MEG | 1,3 | 0,739 | 12 | 40A | 1,1 | 9,8 | 11/18 |
| 5 | 2 | 1 | MEG | 1,3 | 0,739 | 12 | 49A | 1,9 | 11,8 | 30/34 |
| 6 | 2 | 1 | MEG | 2 | 0.373 | 16 | 55A | 2,1 | 12 | 35/48 |
| 7 | 2 | 1 | BDO | 2 | 0.255 | 16 | 59A | 1,6 | 14,9 | 20/45 |

| | | | | | | | | | | |
|---|---|---|---|---|---|---|---|---|---|---|
| * Nicht erfindungsgemäßes Vergleichsbeispiel, # Die theoretische Härte ist der Anteil der Hartsegmente des TPUs: z. B. TH = n(BDO+MDI)/(n(BDO+MDI)+m(Polyol+MDI)) | | | | | | | | | | |

**Tabelle 2: Vergleichsbeispiel 1 und erfindungsgemäße Beispiele 2,3 und 6: Messergebnisse von der Bestimmung des Abriebwiderstands, der Bestimmung des Druckverformungsrests und des Alterungstests.**

| | | Druckverformungsrest | | | Zugfestigkeit [MPa] | Alterungstest bei 80°C Zugfestigkeit [MPa] | Alterungstest 110°C Zugfestigkeit [MPa] |
|---|---|---|---|---|---|---|---|
| Versuchsnummer | Abriebwiderstand [mm³] | Methode A 24h/70°C | Methode C 24h/70°C | 72h/23°C | 0 | 28 | 28 |
| | | | | | Tage | Tage | Tage |
| 1* | 224 | 30 | 24 | 14 | | | |
| 2 | 96 | 21,4 | 16,7 | 8,9 | | | |
| 3 | 38 | 22 | | 12 | 14,4 | 11,1 | 10,1 |
| 6 | 46 | 33 | | 14 | 12 | 11,6 | 7,2 |

| | | | | | | | |
|---|---|---|---|---|---|---|---|
| * Nicht erfindungsgemäßes Vergleichsbeispiel | | | | | | | |

In den angeführten Beispielen der Tabelle 1 (Versuche 1, 2, 4 und 5), welche aus gleichen Rohstoffen und gleicher theoretischer Härte nach unterschiedlichen Verfahren hergestellt wurden, ist deutlich zu erkennen, dass die TPU-Materialien, die durch das erfindungsgemäße Mehrstufenverfahren (Verfahren 2) hergestellt wurden, deutlich schneller verfestigen, das heißt, die gemessene Härte nach 0 Sekunden und auch nach 60 Sekunden der Entnahme aus der Spritzgießmaschine ist höher als bei den jeweiligen Vergleichsversuchen. Bei den Versuchen 6 und 7 ist deutlich zu erkennen, dass die auf Monoethylenglykol (MEG) basierten TPU schneller in der Verfestigung sind als solche, die auf 1,4-Butandiol (BDO) basieren.

Die in Tabelle 2 aufgeführten Beispiele entsprechen den jeweiligen Beispielen aus Tabelle 1. Es ist deutlich zu erkennen, dass der Abriebwiderstand der erfindungsgemäßen Beispiele 2, 3 und 6 signifikant geringer ist als beim Vergleichsbeispiel 1. Auch zeigen die erfindungsgemäßen Beispiele deutlich bessere Werte bei der Bestimmung des Druckverformungsrests. Aus den erfindungsgemäßen Beispielen 3 und 6 lässt sich entnehmen, dass die erfindungsgemäßen Polyurethane eine gute Alterungsbeständigkeit aufweisen.

## Patentansprüche

1. Thermoplastisch verarbeitbares Polyurethanpolymer mit einer Härte von ≤ 60 Shore A erhältlich oder erhalten durch Umsetzen der Komponenten
(A) einem oder mehreren im wesentlichen linearen Polyetherpolyolen und / oder Polyesterpolyolen, wobei die Gesamtmenge der Komponente (A) ein mittleres Molekulargewicht im Bereich von 500 g/mol bis 5000 g/mol aufweist,
(B) einem oder mehreren Diisocyanaten ausgewählt aus der Gruppe bestehend aus 2-Methyl-1,5-diisocyanatopentan, 1,4-Diisocyanatobutan (BDI), 1,5-Diisocyanatopentan (PDI), 1,6-Diisocyanatohexan (HDI), 2,2,4-Trimethyl-l,6-diisocyanatohexan, 2,4,4-Trimethyl-1,6-diisocyanatohexan oder Diphenylmethandiisocyanat-Isomerengemische mit einem 4,4'-Diphenylmethandiisocyanatgehalt von >96 Gew.-%,
(C) einem oder mehreren linearen Diolen mit einem Molekulargewicht von 62 g/mol bis 500 g/mol,
(D) gegebenenfalls in Gegenwart von einem oder mehreren Katalysatoren,
(E) gegebenenfalls in Gegenwart von einem oder mehreren Additiven, Hilfs- und / oder Zusatzstoffen, und
(F) gegebenenfalls in Gegenwart von einem oder mehreren monofunktionellen Kettenabbrechern,
**dadurch gekennzeichnet, dass** das Verfahren die folgenden Schritte umfasst oder daraus besteht:
1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
3) Umsetzen des OH-funktionellen Prepolymers mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt.

2. Thermoplastisch verarbeitbares Polyurethanpolymer nach Anspruch 1, **dadurch gekennzeichnet, dass** als Komponente (A) Polyesterdiole mit einer Schmelztemperatur von ≤ 50 °C, Polyetherpolyole und / oder Mischungen aus mindestens 2 hieraus eingesetzt werden, vorzugsweise das als Komponente (A) Polyetherpolyole, besonders bevorzugt Polyethylendiolether, Polypropylendiolether, Polytetramethylenglykol, und / oder Mischungen aus mindestens 2 hieraus, noch bevorzugter Polypropylendiolether eingesetzt werden, wobei die Polyetherpolyole vorzugsweise ein zahlenmittleres Molekulargewichte Mₙ im Bereich von 750 bis 5000 g/mol und besonders bevorzugt im Bereich von 900 bis 4200 g/mol aufweisen.

3. Thermoplastisch verarbeitbares Polyurethanpolymer nach Anspruch 1 oder 2, **dadurch gekennzeichnet, dass** als Komponente (B) 2-Methyl-1,5-diisocyanatopentan, 1,6-Diisocyanatohexan (HDI), 2,2,4-Trimethyl-l,6-diisocyanatohexan, Diphenylmethandiisocyanat-Isomerengemische mit einem 4,4'-Diphenylmethandiisocyanatgehalt von >96 Gew.-% und / oder Mischungen aus mindestens 2 hieraus eingesetzt werden, vorzugsweise Diphenylmethandiisocyanat-Isomerengemische mit einem 4,4'-Diphenylmethandiisocyanatgehalt von >96 Gew.-% und besonders bevorzugt 4,4'-Diphenylmethandiisocyanat hieraus.

4. Thermoplastisch verarbeitbares Polyurethanpolymer nach einem der Ansprüche 1 bis 3, **dadurch gekennzeichnet, dass** als Komponente (C) 1,2-Ethandiol, 1,4-Butandiol, 1,6-Hexandiol, 1,4-Di-(hydroxyethyl)-hydrochinon, 1,3- Cyclobutandiol und / oder Mischungen aus mindestens 2 hieraus eingesetzt werden, vorzugsweise 1,2-Ethandiol, 1,4-Butandiol, 1,6-Hexandiol und / oder Mischungen aus mindestens 2 hieraus, besonders bevorzugt 1,2-Ethandiol, 1,4-Butandiol und / oder Mischungen hieraus.

5. Thermoplastisch verarbeitbares Polyurethanpolymer nach einem der Ansprüche 1 bis 4, **dadurch gekennzeichnet, dass** das thermoplastisch verarbeitbares Polyurethanpolymer eine Härte im Bereich von 35 Shore A bis 60 Shore A, vorzugsweise im Bereich von 40 Shore A bis 60 Shore A, besonders bevorzugt im Bereich von 40 Shore A bis 55 Shore A aufweist.

6. Weichmacherfreie Zusammensetzung enthaltend mindestens ein thermoplastisch verarbeitbares Polyurethanpolymer mit einer Härte von ≤ 60 Shore A nach einem der Ansprüche 1 bis 5 und ein Additiv.

7. Verwendung eines thermoplastisch verarbeitbaren Polyurethanpolymers mit einer Härte von ≤ 60 Shore A nach einem der Ansprüche 1 bis 5 oder einer weichmacherfreien Zusammensetzung nach Anspruch 6 zur Herstellung von Dichtungen.

8. Verwendung nach Anspruch 7, **dadurch gekennzeichnet, dass** die Dichtungen direkt angespritzte Gehäusedichtungen von Elektro- und Elektronikgeräten und / oder extrudierte Dichtungsprofile sind.

9. Dichtung umfassend oder enthaltend mindestens ein thermoplastisch verarbeitbares Polyurethanpolymer mit einer Härte von ≤ 60 Shore A nach einem der Ansprüche 1 bis 5 oder eine weichmacherfreie Zusammensetzung nach Anspruch 6.

10. Dichtung nach Anspruch 9, **dadurch gekennzeichnet, dass** die Dichtung eine direkt angespritzte Gehäusedichtung von Elektro- und Elektronikgeräten und / oder eine extrudiertes Dichtungsprofil ist.

11. Verwendung eines thermoplastisch verarbeitbaren Polyurethanpolymers mit einer Härte von ≤ 60 Shore A nach einem der Ansprüche 1 bis 5 oder einer weichmacherfreien Zusammensetzung nach Anspruch 6 zur Herstellung von Vibrationsdämpfer, Schwingungsisolatoren und / oder Verbindungsisolatoren.

12. Verwendung nach Anspruch 11, **dadurch gekennzeichnet, dass** die Vibrationsdämpfer, Schwingungsisolatoren und / oder Verbindungsisolatoren Standfüße für Elektro- und Elektronikgeräte, Maschinenfüße, Ecken- und / oder Kantenschutz, Dämpfer für die Seiten von Tennis- und / oder Squashschlägern, Weichkomponente für Schutzhüllen von Mobiltelefonen und / oder Standfüße von Koffern, Sporttaschen oder Freizeittaschen sind.

13. Vibrationsdämpfer, Schwingungsisolator und / oder Verbindungsisolator umfassend oder enthaltend mindestens ein thermoplastisch verarbeitbares Polyurethanpolymer mit einer Härte von ≤ 60 Shore A nach einem der Ansprüche 1 bis 5 oder eine weichmacherfreie Zusammensetzung nach Anspruch 6.

14. Vibrationsdämpfer, Schwingungsisolator und / oder Verbindungsisolator nach Anspruch 13, **dadurch gekennzeichnet, dass** der Vibrationsdämpfer, der Schwingungsisolator und / oder der Verbindungsisolator ein Standfuß für Elektro- und Elektronikgeräte, ein Maschinenfuß, ein Ecken- und / oder Kantenschutz, ein Dämpfer für die Saiten von Tennis- und / oder Squashschlägern, eine Weichkomponente für Schutzhüllen von Mobiltelefonen und / oder ein Standfuß von Koffern, Sporttaschen oder Freizeittaschen ist.

15. Verwendung eines thermoplastisch verarbeitbaren Polyurethanpolymers mit einer Härte von ≤ 60 Shore A nach einem der Ansprüche 1 bis 5 oder einer weichmacherfreien Zusammensetzung nach Anspruch 6 zur Herstellung von Handgriffen.

16. Verwendung nach Anspruch 15, **dadurch gekennzeichnet, dass** die Handgriffe Bestandteil von Handgeräten, Elektrogeräten, Sportgeräten, Elektronikgeräten, Koffern, Sporttaschen, Freizeittaschen, Fahrzeugen, Fahrrädern, Werkzeugen, Behältern und / oder Schreibgeräten sind.

17. Handgriff umfassend oder enthaltend mindestens ein thermoplastisch verarbeitbares Polyurethanpolymer mit einer Härte von ≤ 60 Shore A nach einem der Ansprüche 1 bis 5 oder eine weichmacherfreie Zusammensetzung nach Anspruch 6.

18. Handgriff nach Anspruch 17, **dadurch gekennzeichnet, dass** der Handgriff ein Bestandteil von Handgeräten, Elektrogeräten, Sportgeräten, Elektronikgeräten, Koffern, Sporttaschen, Freizeittaschen, Fahrzeugen, Fahrrädern, Werkzeugen, Behältern und / oder Schreibgeräten ist.

19. Verwendung eines thermoplastisch verarbeitbaren Polyurethanpolymers mit einer Härte von ≤ 60 Shore A nach einem der Ansprüche 1 bis 5 oder einer weichmacherfreien Zusammensetzung nach Anspruch 6 zur Herstellung von Folien, Garn und / oder Fließstoffen.

20. Verwendung nach Anspruch 19, **dadurch gekennzeichnet, dass** die Folie, das Garn und / oder der Fließstoff Bestandteil von einem Oberschuh, von Bekleidung, von Kunstleder, insbesondere Kunstleder für Möbel oder Automobilinnenanwendungen.

21. Verwendung nach Anspruch 19, **dadurch gekennzeichnet, dass** die Folie, eine Folie ist die mit harten Thermoplasten hinterspritzt oder mit PU-Schaumstoff hinterschäumt werden und / oder Bestandteil eines Schichtverbunds

22. Folie, Garn und / oder Fließstoff umfassend oder enthaltend mindestens ein thermoplastisch verarbeitbares Polyurethanpolymer mit einer Härte von ≤ 60 Shore A nach einem der Ansprüche 1 bis 5 oder eine weichmacherfreie Zusammensetzung nach Anspruch 6.

23. Folie, Garn und / oder Fließstoff nach Anspruch 22, **dadurch gekennzeichnet, dass** die Folie, das Garn und / oder der Fließ stoff Bestandteile von einem Oberschuh, von Bekleidung und / oder von Kunstleder für Möbel oder Automobilinnenanwendungen ist.

24. Folie nach Anspruch 22, **dadurch gekennzeichnet, dass** die Folie mit harten Thermoplasten hinterspritzt oder mit PU-Schaumstoff hinterschäumt wird bzw. wurde und / oder Bestandteil eines Schichtverbunds ist.
